# EUROPEAN PATENT SPECIFICATION

(11) **EP 4 651 728 B1**
(45) Date of publication and mention of the grant of the patent: **02.12.2026**
(21) Application number: 24700799.0
(22) Date of filing: 17.01.2024
(51) Int. Cl.: A23C 20/00, A23C 20/02, A23D 7/00, A23D 7/01, A23L 33/11

(54) **PLANT-BASED CHEESE COMPRISING PLANT STEROL ESTERS**
PFLANZENBASIERTER KÄSE MIT PFLANZENSTEROLESTERN
FROMAGE À BASE VÉGÉTALE COMPRENANT DES ESTERS DE STÉROL VÉGÉTAL

(30) Priority: 18.01.2023 EP 23152220
(43) Date of publication of application: 26.11.2025
(73) Proprietor: Flora Food Global Principal B.V., 1083 HK Amsterdam (NL)
(72) Inventor: WONG, Wai Seng, 1083 HK, AMSTERDAM (NL)
(74) Representative: EP&C
(86) International application number: PCT/EP2024/050996
(87) International publication number: WO 2024/153682

(56) References cited:
- WO-A1-2022/164378
- WO-A2-2011/080580
- US-A1- 2006 233 862
- US-A1- 2019 037 872
- "Food Fats and Oils", 1 January 1999, article DENNIS STRAYER ET AL: "Food Fats and Oils", pages: i - iv, XP055426526
- FRANZ ULBERTH ET AL: "Analytical platforms to assess the authenticity of cocoa butter", EUROPEAN JOURNAL OF LIPID SCIENCE TECHNOLOGY, WILEY VCH VERLAG, WEINHEIM, DE, vol. 105, no. 1, 16 January 2003 (2003-01-16), pages 32 - 42, XP072140207, ISSN: 1438-7697, DOI: 10.1002/EJLT.200390003

## Description

### Technical Field

The invention relates to a plant-based cheese substitute and a method for preparing the plant-based cheese substitute.

### Background Art

A growing number of consumers are lowering their meat and dairy intake, or are even adopting a fully vegan lifestyle, thus completely removing animal-derived products from their diet. A vegan lifestyle is thought to be more sustainable, ethical and healthy. This tendency towards veganism has consequently increased the demand for plant-based foods, and especially plant-based alternatives for typical animal-derived products such as meat and cheese.

Typical plant-based cheese analogue compositions comprise plant-based fats in an amount of about 15 wt.% to 30 wt.% based on the total weight of the composition. Further ingredients are non-animal protein and water, along with optional additives such as flavourings and colourings. It has been proven difficult to mimic certain qualities of animal derived products, such as the texture, appearance, and especially the taste.

WO 2011/080580 relates to a healthy low-fat spread that is low in saturated fat and low in trans-fat, made essentially of vegetable oils, fat-soluble ingredients, water, water-soluble ingredients, with the amount of plant sterol esters recommended for obtaining cardiovascular benefits. US 2006/233862 relates to a process for the preparation of a sterol ester containing fat composition, to the product obtained by said process, and to the use thereof in food products such as fat spreads, imitation cheeses and bakery shortenings.

It is an objective of the present invention to provide a solution for at least one of the abovementioned disadvantages, or at least to provide a useful alternative.

### Summary of the invention

Thereto, the present invention provides a plant-based cheese substitute comprising:
- 18 - 35 wt.% of a fat phase;
- 0.1 - 20 wt.% non-animal protein and/or 10 - 50 wt.% starches, which are optionally modified;
- the remainder (up to 100 wt.%) being water,
wherein the wt.% are calculated on the total composition, wherein the cheese substitute comprises from 0.5 - 10 wt.%, preferably from 0.5 - 8 wt.%, more preferably from 1 - 5 wt.% of plant sterol esters, based on the weight of the cheese substitute.

The present inventors have surprisingly found that the addition of plant sterol esters results in improved taste.

Preferably, the fat phase comprises an amount of C18:0 at the 2-position of the glycerol backbone (2-C18:0) of at least 5 wt.%, calculated on the total amount of fatty acids at the 2-position of the glycerol backbone in the fat phase,
wherein the fat phase does not contain more than 5 wt.% of
- tropical oil or tropical oil-derived fractions, wherein the tropical oil is chosen from coconut oil, shea oil, palm kernel oil, palm oil, illipe oil, sal oil, mango oil, cocoa butter, kokum oil, and combinations thereof,
   and not more than 5 wt.% of
- hydrogenated oil or fat or fractions thereof, each based on the weight of the fat phase.

Preferably, the fat phase comprises a structuring fat, more preferably 10 - 100 wt.% of the structuring fat, which structuring fat is an interesterified blend of fats, wherein one of the fats in the blend to be interesterified has > 60 wt.% C18:0 (stearic acid) calculated on the amount of fatty acids of the triglycerides of the fat.

In the majority of plant-based cheeses, coconut oil is used as the source of fat. Like palm oil, coconut oil has a high melting point as compared to other vegetable oils. Coconut oil has been the preferred choice in plant-based cheese analogues over palm oil due to the negative environmental effects associated with the production of palm oil. However, coconut oil is high in saturated fatty acid residues which is undesirable for consumers from a health perspective. Moreover, like palm oil, coconut oil is derived from plants which are found only in tropical regions of the world. This is disadvantageous for the manufacturing of cheese-analogue compositions, which mainly takes place outside of these regions of the world such as in Europe and North America. The tropical fats need to be transported from the regions in which they are grown to Europe and North America. These regions have the largest markets for dairy analogue products. This transport is unwanted from an economical and environmental perspective. WO 2022/164378 for example discloses a cheese-analogue composition which relies on tropical fats such as coconut oil and shea butter.

However, most vegetable derived fats and oils originating from Europe and North America do not have the desired structuring properties such as a high melting point. This problem has previously been solved by hydrogenation of such oils. Hydrogenation is a process of hardening fats and oils by converting unsaturated fatty acids in fats and oils to saturated fats. Hardening of fats is an efficient way of improving the structuring properties of fat and oils. In this way a locally sourced vegetable oil with a lower melting point can be hydrogenated to increase the saturated fatty acid moiety content of the fat, thus increasing its structuring properties. However, hydrogenation is perceived by consumers as a non-natural way of adapting fat compositions. Hydrogenation of fats to improve the structure of the resulting fat is less preferred as consumers are increasingly focused on having products that have a more natural origin. Incomplete or partial hydrogenation also results in products having increased levels of trans-fatty acids. Trans-fatty acids are considered less desirable in view of health considerations. WO 2022/203577 for example discloses a dairy-analogue composition in which tropical fats are avoided. However, fully hydrogenated vegetable oil is used.

The present inventors have furthermore found that fat compositions (structuring fats and fat blends) that differ significantly from conventional tropical oil-based fats can be used in the formulation of plant based cheeses without significantly affecting organoleptic properties, the fat blends used are palm oil free, do not contain fat or oils from tropical origin. The fats do not contain hydrogenated fats, also not as the basis for the structuring fats.

Thereto, preferably, the fat phase comprises an interesterified blend of fats, wherein one of the fats in the blend to be interesterified has > 60 wt.% C18:0 (stearic acid) calculated on the amount of fatty acids of the triglycerides of the fat,
wherein fat phase does not contain more than 5 wt.% of
- tropical oil or tropical oil-derived fractions,
   and not more than 5 wt.% of
- hydrogenated oil or fat or fractions thereof,
each based on the weight of the fat phase.

Preferably, the fat phase comprises, calculated on the amount fatty acids of the triglycerides of the fat phase, an amount of C12:0 (lauric acid) of less than 2 wt.%.

Preferably, the fat phase comprises less than 25 wt.%, preferably less than 20 wt.% of polyunsaturated fatty acids, more preferably less than 17.5 wt.%, most preferably less than 15 wt.% of polyunsaturated fatty acids.

Preferably, the fat phase comprises from 20 - 80 wt.% saturated fatty acids.

Preferably, the fat phase comprises less than 80 wt.% saturated fatty acids, preferably less than 50 wt.% saturated fatty acids, more preferably less than 40 wt.%, most preferably less than 30 wt.%.

Preferably, the fat phase comprises an amount of H-type fatty acids (stearic acid and palmitic acid) from 10 to 50 wt.%.

Preferably, the fat phase comprises an amount of C18:0 from 5 to 25 wt.%.

Preferably, the fat phase further comprises a vegetable oil selected from the group consisting of rapeseed oil, high oleic rapeseed oil, high erucic acid rapeseed oil, soybean oil, sunflower oil, high oleic sunflower oil, high stearic acid sunflower oil, linseed oil, olive oil, corn oil, cottonseed oil, carinata oil, groundnut oil, safflower oil, high oleic safflower oil, peanut oil, rice oil, camelina oil and mixtures thereof, preferably a vegetable oil selected from the group consisting of rapeseed oil, high oleic sunflower oil, sunflower oil, linseed oil and mixtures thereof, more preferably sunflower oil or high oleic sunflower oil, most preferably high oleic sunflower oil.

Preferably, the fat phase comprises an amount of C18:0 at the 2-position of the glycerol backbone (2-C18:0) of from 5 to 50 wt.%, preferably from 10 - 45 wt.%, calculated on the total amount of fatty acids at the 2-position of the glycerol backbone in the fat phase.

Preferably, the fat phase comprises a combined amount of H2U, HU2, and U3 triglycerides, calculated on the amount of triglycerides of at least 50 wt.%, preferably at least 80 wt.%, most preferably at least 90 wt.%.

The starches may be modified or unmodified. Preferably, the plant-based cheese substitute comprises 10 - 50 wt.%, preferably 15 - 35 wt.% starches. Preferably, the starches are selected from the group consisting of wheat starch, corn starch, potato starch, rice starch, tapioca starch, and any combination thereof. Preferably, the starches are modified starches.

Preferably, the plant-based cheese substitute comprises 0.1 - 20 wt.%, preferably 4 - 9 wt.% non-animal protein. Preferably, the non-animal protein is a plant protein, plant protein isolate or plant protein concentrate, preferably wherein the plant protein in the plant protein, plant protein isolate or plant protein concentrate is selected from the group consisting of lentil protein, fava (*vicia faba*) protein and pea protein or combinations thereof.

The invention also provides a method of preparing a plant-based cheese substitute according to the invention, the method comprising the steps of:
- mixing fat, water, plant sterol esters, optional starches, and optional non-animal proteins;
- providing a homogenous mixture from the mixed ingredients by mixing under shear to form an emulsion;
- providing a plant-based cheese analogue composition;
- forming the plant-based cheese substitute.

### Detailed description of the invention

The plant-based cheese substitute comprises a fat phase, which preferably comprises an interesterified blend of fats wherein one of the fats in the blend to be interesterified has > 60 (preferably >70, >80, >90 or even >95) wt.% C18:0 calculated on the amount of fatty acids of the triglycerides of the fat. This latter fat is also called the feedstock. The interesterified blend of fats is also known as structuring fat, and provides structure and texture by crystallisation of the triglycerides in the blend. The structuring fat contains more saturated and longer-chain fatty acids. Such a structuring fat is known from e.g. WO 2021/126069, wherein the feedstock is produced by reacting fully saturated free fatty acids (stearic acid) with glycerol. Vegetable oils on the other hand typically contain more unsaturated fatty acids and are usually liquid at room temperature.

The present inventors have found that the abovementioned structuring fat can be used in the formulation of (fat blends suitable for use in) plant-based cheese. The fat blends impart at least structural similarity to conventional coconut oil-containing products. The fat blends can contain a lower amount of saturated fatty acids compared to conventional (coconut oil containing) products, are non-tropical, and have a low level of trans fatty acids.

### Terminology

The term "oil" or "liquid oil" is typically used for triglyceride compositions that that are liquid at room temperature. The term "liquid oil" is used for triglycerides that are liquid at room temperature, preferably also liquid at temperature below room temperature such as below 15, 10 or 5 °C. Preferably the solid fat content of the liquid oil is 0 at 20 °C, more preferably it is 0 at 15 °C.

The term "tropical oil" is used to define oils from plants which are native to tropical regions of the world. Tropical oils are for example coconut oil, shea oil, palm kernel oil, palm oil, illipe oil, sal oil, mango oil, cocoa butter and kokum oil.

The term "non-tropical oil" is used to define oils which are derived from vegetable fats derived from vegetable sources originating from non-tropical regions of the world such as Europe and North America. The vegetable sources originating from non-tropical regions can be grown and harvested on a commercial scale in those non-tropical regions. Examples of non-tropical oils are rapeseed oil, high oleic rapeseed oil, high erucic acid rapeseed oil, soybean oil, sunflower oil, high oleic sunflower oil, high stearic acid sunflower oil, linseed oil, olive oil, corn oil, cottonseed oil, carinata oil, groundnut oil, safflower oil, high oleic safflower oil, peanut oil, rice oil, and camelina oil.

Preferably the fat phase of the present disclosure has less than 5 wt.%, preferably less than 2 wt.%, of tropical oil, more preferably less than 1 wt.%, 0.5 wt.%, 0.1 wt.% or even 0 wt.% (non-detectable using analysis methods common in the art), based on the weight of the fat phase.

The term "fat", is typically used for triglyceride compositions that are solid at room temperature. The use of the term "oil" or "fat" is hence interchangeable depending on the circumstances that are clear and known in the art. A fat is typically used for structuring a fat phase, i.e. to provide a structure and texture in a mixture with an oil or other fat. It can also be indicated as a structuring fat or hard stock fat. The fat may comprise two or more different hard fats (a blend), but is preferably a single fat. The fat may be an interesterified mixture of one or more fats.

The fat fraction can also be characterized by a triacylglyceride or TAG profile. In the TAG profile and throughout this application, the following abbreviations can be used:

| | |
|---|---|
| M | Medium chain fatty acid (C12-C14) |
| H | Saturated long chain fatty acid: C16:0 or C18:0 |
| P | Palmitic acid, C16:0 |
| S | Stearic acid, C18:0 |
| U | Unsaturated fatty acid |
| O | Oleic acid C18:1 |
| L | Linoleic acid/linolenic acid, C18:2,C18:3 |
| St | Saturated fatty acid |
| StStSt | Trisaturated glyceride |
| StU2 | Monosaturated triglyceride |
| StUSt | Symmetrical saturated triglyceride |
| St2U | Disaturated triglyceride |
| HUH | Symmetrical long chain triglyceride |
| H2U | Disaturated long chain triglyceride with 2 H and 1 U |
| M2U | Disaturated medium chain triglyceride |
| HU2 | Monosaturated long chain triglyceride with 1 H and 2 U |
| U3 | Unsaturated triglyceride |
| H3 | Long chain saturated fatty acid triglyceride |
| H2M | Mixed (2 long, 1 medium) chain fatty acid triglyceride |
| M2Sh | Mixed (2 medium, 1 short) chain fatty acid triglyceride |
| M3 | Medium chain fatty acid triglyceride |
| Sh | Short chain fatty acid (C4-C10) |
| X | Any fatty acid (H, U or Sh) |
| SAFA | Saturated fatty acids |
| MUFA | Mono unsaturated fatty acids |
| PUFA | Poly unsaturated fatty acids |

In this specification all parts, proportions and percentages are by weight. The amount of fatty acids in an oil, fat or blend is based on the total amount of fatty acids in the oil, fat or blend. The amount of fat in a fat phase is based on the total weight of the fat phase. The amount of fat in a fat-containing product is based on the total weight of the fat-containing product. The amount of fatty acids in an oil, fat or blend at a specific position of the glycerol backbone is based on the total amount of fatty acids at the specific position of the glycerol backbone in the oil, fat or blend, unless otherwise stated.

The solid fat content (SFC) in this description and claims is expressed as N-value, essentially as defined in Fette, Seifen Anstrichmittel 80 180-186 (1978). The stabilisation profile applied is heating to a temperature of 80 °C, keeping the oil for at least 10 minutes at 60 °C or higher, keeping the oil for 16 hours at 0 °C and then 30 minutes at the measuring temperature, except where indicated otherwise.

Not hydrogenated means that the fat or oil has not undergone hydrogenation treatment. This entails the fats as well as blends and interesterified mixtures of the fats. Preferably the fat phase of the invention has less than 5 wt.%, preferably less than 2 wt.%, of hydrogenated oil or fat or fractions thereof, more preferably less than 1 wt.%, 0.5 wt.%, 0.1 wt.% or even 0 wt.% (non-detectable using analysis methods common in the art, based on the weight of the fat phase.

Non-hydrogenated fats have essentially no trans-fatty acids. Preferably the fat phase of the invention has less than 5 wt.%, preferably less than 2 wt.%, of trans fatty acids, more preferably less than 1 wt.%, 0.5 wt.%, 0.1 wt.% or even 0 wt.% (non-detectable using analysis methods common in the art), based on the weight of the fat phase.

Conventionally partially hardened fat typically has as one of its disadvantages a relative high level of trans fat. Conventionally partially hardened fats are made by partial hydrogenation of an oil, typically a highly unsaturated oil. A highly unsaturated oil, such as sunflower oil, contains a high amount of unsaturated fatty acids (typically at least 90%), also at the 2-position. Partial hardening through hydrogenation is known to lead to the formation of trans-fatty acids, also at the 2-position. The structuring fat of the present disclosure is obtained by transesterification or glycerolysis with saturated free fatty acids. This avoids trans-fat formation and leads to a fat that has an inherently lower trans-fat level, also on the 2-position.

Interesterification and transesterification are a methods for adapting the fatty acid composition of a fat composition.

Interesterification as used in the present disclosure and distinguished in the present disclosure from transesterification refers to the exchange of fatty acids between triglycerides in a triglyceride mixture. In interesterification, the total fatty acid composition of the triglyceride mixture remains substantially the same, yet the distribution of the fatty acids over the glycerol backbone may be different. Interesterification typically results in a redistribution of the fatty acids over the glycerol backbone.

Transesterification, as used in the present disclosure and distinguished in the present disclosure from interesterification, refers to the exchange of fatty acids between fatty acids (or fatty acid esters) and triglycerides. In transesterification, the total fatty acid composition of the triglyceride mixture changes. Transesterification results in a different fatty acid composition of the triglyceride mixture.

Non-tropical fats and oils with high levels of saturated fatty acids can be obtained for instance through the esterification of saturated fatty acids with glycerol and/or transesterification with other fats to increase the level of saturated fatty acids in the resulting fat.

### Structuring fat

The structuring fat is an element of the fat phase of the plant-based cheese substitute. The fat phase preferably comprises from 10 to 100 wt.% of structuring fat (wt.% calculated on the total weight of the fat phase), more preferably from 25 to 75 wt.%, and most preferably from 40 to 60 wt.%. The structuring fat used in the present disclosure is preferably an interesterified blend of fats wherein one of the fats in the blend (commonly indicated herein as the feedstock or FS) that is interesterified has a very high C18:0 content (>60 wt.% of the fatty acids are C18:0) and/or very low C16:0 content (<10 wt.% of the fatty acids are C16:0). This can be interesterified with another fat (preferably a non-tropical oil, such as rapeseed oil, linseed oil, soy bean oil, maize oil, sunflower oil, or mixtures thereof) that can provide unsaturated fatty acids such as C18:1 and C18:2. The advantage associated with the use of a first fat (feedstock) that is relatively low in C16:0 and relatively high in C18:0 is believed to reside in the increased capability of C18:0 of forming a structuring scaffold wherein the second fat that is interesterified with the feedstock to form the structuring fat can contain a higher amount of unsaturated fatty acids to form the structuring fat to be used in the fat phase. This leads to fat phases which are surprisingly particularly suitable for replacing tropical oils such as coconut oil in cheese substitutes despite the difference in composition in terms of fatty acids .

Typically, the structuring fat used contains from about 5 to 60 wt.% of C18:0. The structuring fat may further contain between 2 to 25 wt.% of C16:0. Preferably, the fats in the blend of fats to be interesterified are non-hydrogenated and/or non-fractionated. Preferably, the fat to be interesterified with the feedstock is a vegetable oil, more preferably a non-tropical vegetable oil, most preferably a non-fractionated non-tropical vegetable oil.

The structuring fat further preferably has a carbon number (i.e. wt.% of triglycerides wherein the total number of fatty acid carbon atoms in the triglycerides amounts to the given number) of CN52 + CN54 of at least 50 wt.%, such as at least 60 or 70 wt.%, preferably between 70 - 90 wt.%, more preferably between 75 - 90 wt.%, calculated on the total weight of triglycerides in the structuring fat. The combined level of CN28 - CN40 on the other hand is preferably lower than 50 wt.%, such as lower than 40, 30, 20 or 10 wt.%, preferably between 1 and 10 wt.%, more preferably between 2 - 8 wt.%.

The fat phase preferably has a carbon number of CN52 + CN54 of at least 60 wt.%, such as at least 70 or 80 wt.%, preferably between 80 - 95 wt.%, more preferably between 85 - 95 wt.%, calculated on the total weight of triglycerides in the fat phase. The combined level of CN28 - CN40 is preferably lower than 40 wt.%, such as lower than 30, 20, 10 or 5 wt.%, preferably between 0.5 and 5 wt.%, more preferably between 1 - 4 wt %.

### Oil

The fat phase preferably further comprises a vegetable oil selected from the group consisting of rapeseed oil, high oleic rapeseed oil, high erucic acid rapeseed oil, soybean oil, sunflower oil, high oleic sunflower oil, high stearic acid sunflower oil, linseed oil, olive oil, corn oil, cottonseed oil, carinata oil, groundnut oil, safflower oil, high oleic safflower oil, peanut oil, rice oil, camelina oil and mixtures thereof, more preferably selected from the group consisting of rapeseed oil, high oleic sunflower oil, sunflower oil, linseed oil and mixtures thereof, yet more preferably sunflower oil or high oleic sunflower oil, most preferably high oleic sunflower oil.

### Starches

The plant-based cheese of the invention further preferably comprises starches, in an amount of 10 - 50 wt.% or 15 - 35 wt%, and a number of different types of starches can be incorporated into cheese. Suitable starches include vegetable starches (e.g., potato starch, arrowroot starch, pea starch, and tapioca) and grain starches (e.g., corn starch, wheat starch, and rice starch). Specific examples of suitable corn starches include dent corn starch, waxy corn or maize starch, and high amylose corn starch. The starches can be used individually or in combination. The starch can be waxy, modified or native. Modified starches, also called starch derivatives, are prepared by physically, enzymatically, or chemically treating native starch, thereby changing the properties of the starch. Modified starches are used in practically all starch applications, such as in food products as a thickening agent, stabilizer or emulsifier. Modified food starches differ in their degree of cross-linking, type of chemical replacement, oxidation level, degree of molecular scission, and ratio of amylose to amylopectin.

In the present invention, the starches may be selected from the group consisting of modified and unmodified starches, preferably modified starches. There is a preference for starches that are selected from the group consisting of wheat starch, corn starch, potato starch, rice starch, tapioca starch, and any combination thereof.

There is a preference for modified tapioca starch. Tapioca starch has a relatively high viscosity, excellent water-holding capacity and binding ability. It is bland and clean in flavor. Once heated it forms a clear gel exhibiting a long and slightly stingy texture. Upon cooling, it sets to a soft gel. Once cooked, the gel resembles that of a potato but with less stringy texture and a more neutral flavor, suitable for use as a thickener. Tapioca starch, further provided the desired moisture retention and cell size.

There also is a preference for modified potato starch. There further is a preference for modified corn starch. There is a particular preference for a combination of two or more, preferably all three starches. In such a combination of three starches, the content of each starch is minimally 20 wt.% of the total starch content. The starches can be e.g. combined in a ratio (w/w) of from 20:20:60 to 40:40:20.

### Protein

The plant-based cheese of the invention preferably further comprises a non-animal protein, which is preferably a plant protein or plant protein isolate or plant protein concentrate. The plant protein concentrate may include one or more of pea protein, fava (*vicia faba*) protein, amaranth protein, chickpea protein, lima beans protein, lentil protein; and any other suitable vegetable protein; or combinations thereof. Preferably, the plant protein concentrate does not include any or substantially any soy bean protein to minimize allergenic reactions. A plant protein or plant protein isolate or concentrate can be present in an amount from 0.1 to 20 wt.%, preferably from 4 to 9 wt.%, more preferably from 3 to 8 wt.%, calculated on the total composition. In preferred embodiments, the plant protein is selected from the group consisting of lentil protein, fava (*vicia faba*) protein and pea protein or combinations thereof. The presence of a plant protein as outlined herein, provides additional textural advantages to the plant-based cheese and improves stability, attributed to the emulsifying properties of the plant protein.

For example, the semi-hard plant-based cheese of the invention is as defined in appended claim 1 and comprises:

| | Min-Max (wt.%) | Preferred Min-Max (wt.%) | Most preferred Min-Max (wt.%) |
|---|---|---|---|
| fat phase | 18 - 35 | 18 - 35 | 20 - 30 |
| non-animal protein | 0 - 20 | 0.1 - 20 | 4 - 9 |
| starch | 0 - 50 | 10 - 50 | 15 - 35 |
| water | up to 100% | up to 100% | up to 100% |

### Plant sterol ester

Plant sterols, also known as phytosterols, are well known cholesterol lowering agents. The benefit of these ingredients to reduce the risk to cardiovascular diseases has been established for years. Where these active ingredients were initially available in the form of capsules and other pharmaceutical preparations only, over the years they have also become available in food products. The incorporation of these active ingredients in food products that are consumed daily enables the easy and reliable intake of these ingredients for many people.

Plant sterols can be classified in three groups, 4-desmethylsterols, 4-monomethylsterols and 4,4'-dimethylsterols. In oils they mainly exist as free sterols and sterol esters of fatty acids although sterol glucosides and acylated sterol glucosides are also present. There are three major phytosterols namely beta-sitosterol, stigmasterol and campesterol. Brassicasterol is a further phytosterol. Schematic drawings of the components meant are as given in "Influence of Processing on Sterols of Edible Vegetable Oils", S. P. Kochhar; Prop. Lipid Res. 22: pp. 161-188. Preferably, the plant sterol comprises at least 85 wt% of stigmasterol, more preferably the plant sterol is E499.

The respective 5 alpha-saturated derivatives such as sitostanol, campestanol and ergostanol and their derivatives are referred to as plant stanol. For the purpose of the present invention the term 'plant sterol' is defined to mean plant sterol, plant stanol and mixtures thereof.

Plant sterols and stanols as such are difficult to formulate into food products due to their poor solubility in oil and immiscibility with water which may result in food products having poor organoleptic properties, e.g. a sandy mouth feel. This made the choice of food products suitable for incorporation of plant sterols and stanols initially very limited. To overcome this drawback plant sterols and stanols have been modified to improve their solubility in the fat phase of food products. The most common modification of plant sterols and stanols is to their corresponding fatty acid esters (i.e. plant sterol ester and plant stanol ester). For the purpose of this invention the term "plant sterol esters" is defined as plant sterol esters, plant stanol esters or combinations thereof. Thus, the plant sterol esters employed are selected from plant sterol esters, plant stanol esters and combinations thereof. It should be noted that commercially available plant sterol esters and plant stanol esters may contain a considerable amount of non-esterified plant sterol and plant stanol as it is not always possible to achieve a degree of esterification of 100%. The plant sterol esters may comprise up to 20 wt.% (calculated on the total amount of esterified and non-esterified plant sterol) of non-esterified plant sterol, preferably less than 15 wt.%, even more preferably less than 10 wt.% an still more preferably less than 5 wt.% of non-esterified plant sterol.

Nevertheless, the incorporation of plant sterol esters in food products has remained challenging. Plant sterol esters are known to have a noticeable influence on the organoleptic properties of the food products they are incorporated in. For example, in the case of fat-continuous spreads, plant sterol esters have been found to negatively influence the in-mouth melting characteristics and other important organoleptic properties. Surprisingly, in the present invention the addition of plant sterol esters results in improved taste.

The cheese substitute comprises from 0.5 - 10 wt.%, preferably from 0.5 - 8 wt.%, such as from 0.5 - 5 wt.%, most preferably from 1 - 5 wt.% or from 1 - 3 wt.% of plant sterol esters, based on the weight of the cheese substitute. The plant sterol esters can be from different origin such as from Pine tree, Canola, Soy, and combinations thereof, such as a combination of Pine tree and Canola.

Advantageously, at least 25 wt.% of the fatty acids contained in the plant sterol esters are (un)saturated fatty acids. Even more preferably, at least 25 wt. % of the fatty acids contained in the plant sterol esters are polyunsaturated fatty acids.

It is further preferred to employ plant sterol esters having a low melting point, for example a melting point of less than 70 °C, preferably of less than 60 °C.

For example the plant-based cheese of the invention is as defined in appended claim 1 and comprises:

| | Min - Max wt.% | Preferred Min - Max wt.% | More preferred Min - Max wt.% | Most preferred Min - Max wt.% |
|---|---|---|---|---|
| fat phase | 18 - 35 | 20 - 30 | 20 - 30 | 20 - 30 |
| non-animal protein | 0 - 20 | 0 - 20 | 0 - 20 | 4 - 9 |
| Starch | 0 - 50 | 0 - 50 | 0 - 50 | 15 - 35 |
| sterol esters | 0.5 - 10 | 0.5 - 10 | 0.5 - 8 | 1 - 5 |
| Water | up to 100% | up to 100% | up to 100% | up to 100% |

### Further ingredients

The plant-based cheese of the present disclosure can contain further ingredients such as stabilizers, acidifiers, colorants and flavoring agents.

The plant-based cheese of the present disclosure may further contain stabilizers. Stabilizers improve the textural quality of foods. They can impart a rich mouth feel without masking flavor, enhance moisture retention and prevents syneresis. Examples of suitable gums that can be incorporated include, but are not limited to, xanthan gum, guar gum, konjac flour and locust bean gum. Examples of suitable stabilizers include chondrus extract (carrageenan), pectin, gelatin, and agar. Blends of Xanthan Gum, Locust Bean Gum and Guar Gum are commonly used in the production of cheese analogues.

Acidulants or acidifiers are additives that give a sharp taste to foods by increasing the tartness or acidity. They also assist in the setting of gels and to act as preservatives. An acidulant (acidic agent) can be incorporated to adjust the pH of the finished cheese to a desired level. In combination with emulsifying salts, the acidulants in the dry blend will help maintain the pH at the desired level. Natural acidifiers such as lemon juice or apple juice may also be used. The titratable acidity and pH of the cheese can be controlled to help regulate the melt down characteristics of the finished cheese. Various acids can be employed at the end of the cooking process; examples of suitable acids include, but are not limited to, acetic acid, citric acid, fumaric acid, lactic acid, malic acid, phosphoric acid, tartaric acid adipic acid, hydrochloric acid, glucano delta lactone, lactobionic acid or Genlac C, the latter being a blend of water, citric acid, lactic acid, and acetic acid. Acid is typically added to adjust the pH of the finished cheese to a pH from about 4.8 - 6.5 is reached.

A colorant can be incorporated into the soft or firm/semi-hard ripened or unripened blended cheese to adjust its natural color. This can be useful, for example, if consumers have a preference for a color other than the naturally-occurring color. Examples of suitable colorants include annatto, turmeric, titanium dioxide, and beta-carotene. Colorants may be of both the natural or artificial color. If one wished to color the cheese a red, an artificial color such as FD&C red #40 can be used. Annatto imparts a yellowish color to cheese. The yellowish color often is preferred by consumers who perceive it to indicate a "richer" product upon cooking on a pizza. The amount of colorant added is typically in the range of about 0.01 to 0.02 wt.%, based on the weight of the finished cheese. Turmeric, if used, is generally added in an amount of about 0.01 to 0.001 wt.%. If annatto is added, it normally is added to about 0.1 to 0.2 wt.%.

Various flavoring agents can also be incorporated into the cheese to tailor the flavor profile of the cheese to meet consumer preferences. Suitable flavors for mixing into the heated cheese include, for example, natural mozzarella flavor such as diacetyl and/or lipolyzed fat, or enzyme modified cheese for cheddar cheese. Flavoring agents are typically added in an amount such that the concentration in the final cheese product is within the range of about 0.01 to 5 wt.%.

The cheese of the present disclosure is preferably a semi-hard cheese. A semi-hard cheese according to the disclosure can have a fat (or oil) content of between 18 and 35 wt.%. The amounts of starch and protein may vary. Preferably, the combined amount of starch and protein is between 15 and 40 wt.%, with protein % ranging from 0 to 20 wt.%.

In a further aspect of the invention, it pertains to a method of preparing a plant-based cheese substitute according to the invention, the method comprising the steps of:
- mixing fat, water, plant sterol esters, optional starches, and optional non-animal proteins;
- providing a homogenous mixture from the mixed ingredients by mixing under shear to form an emulsion;
- providing a plant-based cheese analogue composition;
- forming the plant-based cheese substitute.

The process of the present disclosure can be performed in a variety of ways that have an effect on the structure, texture and mouthfeel of the product. In certain embodiments, in the mixing step, the dry ingredients are suspended or dissolved in water followed by the addition of fat. In preferred embodiments, the addition of fat is under shear until a homogenous mixture is obtained. In other embodiments, in the mixing step, a pre-mix is made from the dry ingredients, followed by the addition of fat and water. In preferred embodiments, the addition of fat and water is under shear until a homogenous mixture is obtained. In certain embodiments, the addition of adding fat is under shear until a homogenous mixture is obtained. In certain embodiments, in the mixing step, the dry ingredients are combined with fat, followed by the addition of water. In certain embodiments, the addition of fat followed by the addition of water is under shear until a homogenous mixture is obtained.

The pH of the water or the homogenous mixture can be adjusted to between 5 and 8, preferably between 5.5 and 7, more preferably between 4.8 and 6.5.

The method can comprise a step of heating the water, the fat and/or the emulsion to a temperature ranging from 20 to 85 degrees centigrade, preferably between 50 and 70 degrees centigrade.

The method may further comprise a step of comprising cooling the homogenised emulsion to a temperature ranging from 0 to 20 degrees centigrade, preferable between 2 and 10 degrees centigrade. This allows the product to settle and become firm. The cooling process may also be useful for forming the product, i.e. mould it into a desired shape.

Thus, in preferred embodiments, the dry ingredients are mixed to from a pre-mix. To the premix, fat is added under shear, followed by the addition of water under shear. Alternatively, water is added to the premix under shear, followed by the addition of oil. The resulting cheese expressed a lower exudation and an improve mouthfeel over cheese in which the ingredients were all combined and subsequently mixed under shear.

### Examples

The invention is illustrated by the non-limiting examples and comparative examples described below.

### Characterization of the starting components and products

The products resulting from the interesterification were analysed using the following analytical methods:

### FA analysis

For starting fat or fat-containing products, the overall fatty acid analysis and the triglyceride composition are determined using conventional procedures in the art such as FAME analysis, GLC/Carbon number method and HPLC silver phase method such as described for example in EP78568, EP652289, JOACS (19914), 68(5), 289-293 and Hammond E.W.J., Chromatography, 203, 397, 1981.

### Solid Fat Content (SFC) measurements

The solid fat content (SFC) in this description and claims is expressed as the N-value, as defined in Fette, Seifen Anstrichmittel 80 180-186 (1978). The N-Value gives the percentage of fat which is solid or in the crystallised form at a given temperature. For example, N20 = 35 indicates that 35% of the fat is in crystallised form at 20 °C (the amount of solids at that temperature).

The stabilization profile applied is heating to a temperature of 80 °C, keeping the oil for at least 10 minutes at 60 °C or higher, keeping the oil for 1 hour at 0 °C and then 30 minutes at the measuring temperature (tempered). An alternative method is described in IUPAC 2.150 method, serial, non-tempered.

### 2-Position analysis

The method is based on the Joint JOCS/AOCS Official Method Ch 3a-19 (2019). This method provides a procedure for the determination of the composition of fatty acids which are esterified at the sn-2 position (β (beta) or internal position) of the triacylglycerol molecules in animal and vegetable fats and oils. The method is comprised of the 1(3)-position selective transesterification of the triacylglycerols with ethanol by *Candida antarctica* lipase to yield 2-monoacylglycerols, followed by the separation of the 2-monoacylglycerols by silica-gel chromatography, and determination of their fatty acid composition by gas chromatography.

### Materials

The ingredients used to prepare plant-based cheese substitutes and the fat phase therein are all commercially free available compounds and compositions.

### Feedstock

A feedstock was obtained by reacting an excess of stearic acid with glycerol under increased pressure and temperature in a conventional way (24 hrs, 150 - 220 °C, reduced pressure). After completion of the reaction, the excess stearic acid was removed by stripping to yield a fat with a C18:0 content of 96.4 % and a CN54 of 90 %. Data of the feedstock used are presented in Table 1.

### Structuring fat

The feedstock can be interesterified with other non-tropical oils and fats (sunflower oil, rapeseed oil) to produce a structuring fat (Example 1). Interesterification can be executed by chemical interesterification (CIE) with a catalyst (NaOCH₃). Alternatively, structuring fats can be prepared by non-catalytic interesterification or by enzymatic interesterification. The ratio of the feedstock and the other oils and fats is selected to optimize the properties of the desired structuring fat as an ingredient in the plant-based cheese substitute.

### Chemical Interesterification Procedure (CIE)

The feedstock is blended with other oils and fats in an appropriate ratio as specified to come to the desired structuring fat. An amount of NaOH (50 % w/w solution in water) is added to ensure FFA of the blend is <0.05% before catalyst dosing. Once the oil is free of FFA, the oil is dried under vacuum to eliminate any residual water (<100 ppm as measured by Karl Fisher titration). The catalyst is added (0.1% w/w sodium methoxide) and the blend brought under vacuum (25 mbar). The reaction starts when the color of the blend darkens (red/brownish). Once the reaction is started, the reaction is continued for 30 minutes at 90 °C and 25 mbar. After completion of the reaction, the catalyst is inactivated by breaking the vacuum in the reactor and adding citric acid. The acid is dosed to ensure 20% molar excess vis-a-vis added catalyst. Citric acid is dosed as a 20% solution (w/w in water). The mixture is allowed to react for 15 minutes at 90 °C at atmospheric pressure. The CIE structuring fat is post-treated: bleached and deodorized. The resulting structuring fat is analysed for TAG profile and N-line.

### Enzymatic Interesterification Procedure (EIE)

The feedstock is blended with other oils and fats in an appropriate ratio to come to the desired structuring fat. 8% of Lipozyme TLIM is added to the blend. The mixture is allowed to react at 70 °C, atmospheric pressure and under agitation to keep the enzyme in suspension for 24 hours. Subsequently the enzyme is filtered off.
The EIE structuring fat is post-treated: bleached and deodorized. The resulting structuring fat is analysed for TAG profile, N-line, 2-position FA composition.

### Bleaching

The oil is heated to 85 °C. A stoichiometric amount of citric acid (30 % solution) is dosed to acidulate soaps and the mixture reacted for 15 minutes at atmospheric pressure. The oil is heated to 100 °C under vacuum (50 mbar). Bleaching earth (1% - Tonsil 210FF or equivalent activated clay) is added. The slurry is agitated for 30 minutes, at 100 °C and 50 mbar. The bleaching earth is filtered off.

### Deodorization

The bleached oil is deodorized until FFA < 0.05% (indicative parameters: 240 °C - 3 mbar - 0.5 - 1 % stripping steam). Cool down to 80 °C followed by purging with nitrogen and storage of the structuring fat in hermetically closed recipients.

### Emulsification

Fats and blends with further ingredients are prepared by blending fats, oils and/or aqueous phases using conventional procedures such as described in handbooks like "Fats and Oils Handbook", 1998, Michael Bockisch.

### Example 1 Structuring fat (not according to the present invention)

Using the above general procedure for chemical interesterification, a mixture of 40 parts by weight feedstock, and 60 parts by weight of rapeseed oil (RP) are chemically interesterified. The results are presented in Table 1. Table 1 also contains data for pure coconut oil (CNO) and pure high oleic sunflower oil (HOSF).

### Example 2 Fat phase (not according to the present invention)

A fat phase was prepared by blending 50 parts by weight of the structuring fat of example 1 with 50 parts by weight of high oleic sunflower oil to produce the fat phase of Example 2. The results are presented in Table 1, wherein FS is feedstock, CN is coconut oil, RP is rapeseed oil, and HOSF is high oleic sunflower oil. The amount of C18:0 at the 2-position (2-C18:0) in examples 1 and 2 was found to be similar to the overall C18:0 content. The 2-C18:0 level in examples 1 (structuring fat) and 2 (fat blend) is very different from the level in CN.

| **Table 1** | **FS** | **CN** | **RP** | **HOSF** | **Ex. 1** | **Ex. 2** |
|---|---|---|---|---|---|---|
| **FAC %** | | | | | | |
| C8:0 | | 7.5 | | | | 0.0 |
| C10:0 | | 6.5 | | | | 0.0 |
| C12:0 | | 48.4 | | | 0.2 | 0.1 |
| C14:0 | | 19.5 | | 0.1 | 0.1 | 0.1 |
| C16:0 | 0.9 | 8.4 | 4.3 | 3.8 | 5.2 | 4.5 |
| C18:0 | 96.4 | 1.9 | 1.7 | 4.4 | 38.7 | 21.5 |
| C18:1 | 0.4 | 5.9 | 63.3 | 82.6 | 35.9 | 59.2 |
| C18:2 | 0.1 | 1.9 | 20.1 | 7.9 | 11.5 | 9.7 |
| C18:3 | | 0.0 | 9.8 | 0.0 | 5.4 | 2.7 |
| C20:0 | 1.0 | 0.0 | 0.6 | 0.3 | 1.0 | 0.6 |
| C20:1 | | 0.0 | | | 0.7 | 0.4 |
| C22:0 | 0.5 | 0.0 | 0.3 | 1.0 | 0.3 | 0.6 |
| C24:0 | | 0.0 | | 0.0 | 0.1 | 0.1 |
| SAFA | 98.8 | 92.1 | 6.8 | 9.6 | 45.6 | 27.6 |
| MUFA | 0.4 | 5.9 | 63.3 | 82.6 | 36.6 | 59.6 |
| PUFA | 0.1 | 1.9 | 29.9 | 7.9 | 16.9 | 12.4 |

| **2-position FAC %** | | | | | | |
|---|---|---|---|---|---|---|
| C8:0 | | 0.5 | | 0.0 | 0.0 | 0.0 |
| C10:0 | | 3.0 | | 0.0 | 0.0 | 0.0 |
| C12:0 | 0.2 | 80.9 | 0.2 | 0.0 | 0.0 | 0.0 |
| C14:0 | 0.1 | 10.0 | 0.1 | 0.0 | 0.0 | 0.0 |
| C16:0 | 1.3 | 0.9 | 1.3 | 0.3 | 5.0 | 2.6 |
| C18:3n3 | | 0.0 | | 0.0 | 5.9 | 2.9 |
| C18:2n6 | 0.4 | 0.4 | 0.4 | 8.3 | 12.1 | 10.2 |
| C18:1n9 | 0.6 | 4.5 | 0.6 | 91.3 | 38.0 | 64.6 |
| C18:0 | 95.8 | 0.0 | 95.8 | 0.2 | 37.5 | 18.8 |
| C20:0 | 0.9 | 0.0 | 0.9 | 0.0 | 1.2 | 0.6 |
| C22:0 | 0.4 | 0.0 | 0.4 | 0.0 | 0.5 | 0.2 |

| **N-line** | | | | | | |
|---|---|---|---|---|---|---|
| N5 | 96.6 | 93.4 | | 0.0 | 40.6 | 15.1 |
| N10 | 96.4 | 81.8 | | 0.0 | 33.7 | 15.7 |
| N15 | 96.1 | 57.8 | | 0.0 | 25.1 | 13.5 |
| N20 | 95.7 | 29.1 | | 0.0 | 23.1 | 11.6 |
| N25 | 95.6 | 0.0 | | 0.0 | 23.2 | 8.4 |
| N30 | 95.7 | 0.0 | | 0.0 | 15.7 | 6.4 |
| N35 | 95.4 | 0.0 | | 0.0 | 11.9 | 4.7 |
| N40 | | 0.0 | | 0.0 | 8.3 | 3 |
| N45 | | 0.0 | | 0.0 | 5.3 | 1.9 |
| N50 | | 0.0 | | 0.0 | 3.0 | 0.6 |

| **Carbon number** | | | | | | |
|---|---|---|---|---|---|---|
| CN28 | | 1.8 | | 0.0 | 0.1 | 0.1 |
| CN30 | | 2.8 | | 0.0 | <0.1 | |
| CN32 | | 9.2 | | 0.0 | <0.1 | |
| CN34 | | 12.2 | | 0.0 | <0.1 | |
| CN36 | | 17.1 | | 0.0 | 0.4 | 0.2 |
| CN38 | | 19.1 | | 0.0 | 4.7 | 2.4 |
| CN40 | | 14.4 | | 0.0 | 0.3 | 0.2 |
| CN42 | | 11.9 | | 0.0 | <0.1 | |
| CN44 | | 6.7 | | 0.0 | 0.1 | 0.1 |
| CN46 | | 2.9 | | 0.0 | 0.2 | 0.1 |
| CN48 | | 1.5 | | 0.0 | 1.3 | 0.7 |
| CN50 | | 0.3 | | 0.7 | 1.4 | 1.0 |
| CN52 | | 0.1 | | 11.2 | 13.8 | 12.5 |
| CN54 | | 0.0 | | 84.8 | 69.0 | 76.9 |
| CN56 | | 0.0 | | 0.9 | 4.3 | 2.6 |
| CN58 | | 0.0 | | 2.4 | 1.0 | 1.7 |

| **TAG-GROUP** | | | | | | |
|---|---|---|---|---|---|---|
| H | 97.3 | 10.3 | | 8.2 | 43.9 | 26.0 |
| M | 0.0 | 67.9 | | 0.1 | 0.3 | 0.2 |
| Sh | | 13.9 | | 0.0 | 0.0 | 0.0 |
| U | 0.5 | 7.8 | | 90.5 | 52.8 | 71.6 |
| H3 | | 0.1 | | 0.1 | 8.5 | 1.8 |
| H2M | | 2.2 | | 0.0 | 0.2 | 0.0 |
| H2U | | 0.2 | | 1.8 | 30.5 | 14.6 |
| H2Sh | | 0.4 | | 0.0 | 0.0 | 0.0 |
| HM2 | | 14.2 | | 0.0 | 0.0 | 0.0 |
| HMSh | | 5.8 | | 0.0 | 0.0 | 0.0 |
| HSh2 | | 0.6 | | 0.0 | 0.0 | 0.0 |
| M2Sh | | 19.2 | | 0.0 | 0.0 | 0.0 |
| MSh2 | | 3.9 | | 0.0 | 0.0 | 0.0 |
| HShU | | 0.7 | | 0.0 | 0.0 | 0.0 |
| HU2 | | 0.2 | | 20.1 | 36.7 | 40.1 |
| HMU | | 3.3 | | 0.0 | 0.4 | 0.2 |
| M2U | | 10.8 | | 0.0 | 0.0 | 0.0 |
| MShU | | 4.4 | | 0.0 | 0.0 | 0.0 |
| MU2 | | 1.3 | | 0.2 | 0.3 | 0.3 |
| Sh3 | | 0.3 | | 0.0 | 0.0 | 0.0 |
| Sh2U | | 0.5 | | 0.0 | 0.0 | 0.0 |
| ShU2 | | 0.3 | | 0.0 | 0.0 | 0.0 |
| U3 | | 0.0 | | 74.0 | 14.7 | 36.7 |
| M3 | | 31.3 | | 0.0 | 0.0 | 0.0 |

### Examples 3 - 6 Plant-based cheese substitutes (comparative example 3 and examples 3 and 4 are not according to the present invention, while examples 5 and 6 are according to the present invention)

The plant-based cheese substitutes were made by mixing water, proteins, starches, fat and other ingredients in a blender, such as a high shear mixer, typically a Thermomixer, at a medium speed and for about 1 minute at a temperature below pasteurization, followed by mixing under high shear, typically at 50 - 70 °C (pasteurization temperature) until a homogenous mass was obtained, typically after 5 - 10 minutes. Viscosity was noticeably increased. The mixtures were allowed to cool to 4 °C and set for two days.

The prepared cheese substitutes are described in Table 2:

| parts by weight (w/w) | | C. Ex. 3 | Ex. 3 | Ex. 4 | Ex. 5 | Ex. 6 |
|---|---|---|---|---|---|---|
| water | | 44 | 44 | 44 | 44 | 44 |
| structuring fat (ex. 1: structuring fat) | | | 24 | | | |
| fat phase (ex. 2: structuring fat + HOSF) | | | | 24 | | 22 |
| coconut oil (CNO) | | 24 | | | 22 | |
| sterol ester | | | | | 2 | 2 |
| plant protein (lentil and/or pea) | | 5 | 5 | 5 | 5 | 5 |
| starch (total) | | 25.7 | 25.7 | 25.7 | 25.7 | 25.7 |
| | *modified tapioca starch* | *9.2* | *9.2* | *9.2* | *9.2* | *9.2* |
| | *modified potato starch* | *9.5* | *9.5* | *9.5* | *9.5* | *9.5* |
| | *modified corn starch* | *7* | *7* | *7* | *7* | *7* |
| colorant (diluted) | | 0.72 | 0.72 | 0.72 | 0.72 | 0.72 |
| flavor | | 0.46 | 0.46 | 0.46 | 0.46 | 0.46 |
| salt | | 2.24 | 2.24 | 2.24 | 2.24 | 2.24 |
| calcium salt | | 1 | 1 | 1 | 1 | 1 |
| acidifier | | 2 | 2 | 2 | 2 | 2 |

### Testing

The cheeses were tested by a trained panel and with a laboratory texture analyzer (Stable Micro Systems, TA.XTplusC)

Texture attributes tested with a texture analyzer were hardness, springiness, cohesiveness, gumminess, chewiness, and resilience (Table 3). Furthermore fracture analysis and Scheiber melt measurements were performed (Table 4). Measurements were performed according to the manufacturer's instructions.

**Table 3.**

| | **Hardness** | **Springiness** | **Cohesiveness** | **Gumminess** | **Chewiness** | **Resilience** |
|---|---|---|---|---|---|---|
| C. Ex. 3 | 4293.1 | 1.0 | 0.9 | 3911.1 | 3761.1 | 0.7 |
| Ex. 3 | 6097.9 | 1.0 | 0.9 | 5359.6 | 5124.9 | 0.6 |
| Ex. 4 | 4042.3 | 0.9 | 0.9 | 3656.9 | 3370.4 | 0.7 |
| Ex. 5 | 6334.8 | 1.0 | 0.9 | 5442.4 | 5183.3 | 0.6 |

**Table 4.**

| | **Fracture analysis** | | | **Scheiber melt** |
|---|---|---|---|---|
| | **Force (g)** | **Distance (mm)** | **Time (s)** | |
| C. Ex. 3 | 6916.2 | 8.233 | 4.12 | 2.81 |
| Ex. 3 | 10055.7 | 8.221 | 4.12 | 2.53 |
| Ex. 4 | 7306.3 | 8.224 | 4.12 | 2.66 |
| Ex. 5 | 8837.7 | 8.224 | 4.12 | 2.41 |

All data were compared to the data of comparative example 3, and a percentage of similarity was calculated based on the difference between the compared values. The results are given in Table 5. A value of 100 indicates an equal value as the value of the comparative example, thus perfect similarity of the example cheese with cheese prepared without sterol esters and with a fat phase consisting of coconut oil (comparative example 3). A lower value in table 5 indicates less similarity. The overall value is the average over the different texture attributes.

**Table 5.**

| **Attribute** | **Ex. 3** | **Ex. 4** | **Ex. 5** | **Ex. 6** |
|---|---|---|---|---|
| Hardness | 58.0 | 94.2 | 52.44 | 86.85 |
| Gumminess | 63.0 | 93.5 | 60.85 | 81.22 |
| Cohesiveness | 96.4 | 99.3 | 94.7 | 93.71 |
| Chewiness | 63.7 | 89.6 | 34.5 | 75.28 |
| Fracture | 54.6 | 94.4 | 72.21 | 93.36 |
| Scheiber melt | 90 | 94 | 86 | 70 |
| **Overall** | **70.9** | **94.2** | **66.8** | **83.4** |

As can be seen, all examples have at least an overall similarity of 65 % with respect to comparative example 3. Examples prepared with a fat phase according to the present disclosure even have an overall similarity of at least 70 %. Especially cheeses prepared with a fat phase comprising a 50/50 blend of structuring fat and high oleic sunflower oil have the highest similarity in texture.

Thus, cheeses prepared with a fat phase according to the present disclosure have a high textural similarity as compared to cheese prepared with coconut oil.

In order to assess the organoleptic properties, testing by a trained panel (panel size 9) was performed. A quantitative description analysis was used. The analysis delivers a complete profile of each cheese substitute covering all sensory dimensions by using a specifically discussed and commonly understood list of attributes developed by the panel. For training of the panel suitable aroma or other flavour references were used. Comparative example 3 was used as the control product. Then the evaluation of the test products took place in reference to the control product. Two to three assessments per product were made. A bite was taken from the product and the relevant parameter was assessed comparatively (higher, the same or lower than the control product).

Tested attributes were flavor, color, firmness, brittleness, chewiness, and crumbiness. The results are given in Table 6, wherein the majority vote is highlighted.

**Table 6.**

| **Flavor** | **Worse** | **Similar** | **Better** | **Color** | **Less** | **Similar** | **More** |
|---|---|---|---|---|---|---|---|
| Ex. 3 | **4** | **4** | 1 | Ex. 3 | **8** | 1 | |
| Ex. 4 | **5** | **4** | | Ex. 4 | 2 | 7 | |
| Ex. 5 | 1 | 7 | 1 | Ex. 5 | **6** | 1 | |
| Ex. 6 | 1 | 3 | **4** | Ex. 6 | | | |

| **Britleness** | **Less** | **Similar** | **More** | **Chewiness** | **Less** | **Similar** | **More** |
|---|---|---|---|---|---|---|---|
| Ex. 3 | 2 | **6** | 1 | Ex. 3 | 4 | **5** | |
| Ex. 4 | 3 | **5** | 1 | Ex. 4 | 3 | **5** | 1 |
| Ex. 5 | 3 | **5** | 1 | Ex. 5 | 1 | **4** | **4** |
| Ex. 6 | 3 | **5** | | Ex. 6 | 2 | 2 | **4** |

| **Firnmess** | **Less** | **Similar** | **More** | **Crumbiness** | **Less** | **Similar** | **More** |
|---|---|---|---|---|---|---|---|
| Ex. 3 | 2 | 1 | **6** | Ex. 3 | **4** | **4** | 1 |
| Ex. 4 | 3 | **4** | 2 | Ex. 4 | 2 | 3 | **4** |
| Ex. 5 | 1 | 3 | **5** | Ex. 5 | 1 | **7** | 1 |
| Ex. 6 | 3 | **4** | 1 | Ex. 6 | **4** | 3 | |

As can be seen from table 6, addition of sterol ester to a new fat cheese especially improves the flavor of the cheese as compared to the prior art cheese with CNO.

## Claims

1. Plant-based cheese substitute comprising:
- 18 - 35 wt.% of a fat phase;
- 0.1 - 20 wt.% non-animal protein and/or 10 - 50 wt.% starches, which are optionally modified;
- the remainder (up to 100 wt.%) being water,
wherein the wt.% are calculated on the total composition,
wherein the cheese substitute comprises from 0.5 - 10 wt.%, preferably from 0.5 - 8 wt.%, more preferably from 1 - 5 wt.% of plant sterol esters, based on the weight of the cheese substitute.

2. Plant-based cheese substitute according to claim 1, wherein the fat phase comprises an amount of C18:0 at the 2-position of the glycerol backbone (2-C18:0) of at least 5 wt.%, calculated on the total amount of fatty acids at the 2-position of the glycerol backbone in the fat phase,
wherein the fat phase does not contain more than 5 wt.% of
- tropical oil or tropical oil-derived fractions, wherein the tropical oil is chosen from coconut oil, shea oil, palm kernel oil, palm oil, illipe oil, sal oil, mango oil, cocoa butter, kokum oil, and combinations thereof,
and not more than 5 wt.% of
- hydrogenated oil or fat or fractions thereof,
each based on the weight of the fat phase.

3. Plant-based cheese substitute according to claim 1 or 2, wherein the fat phase comprises, calculated on the amount fatty acids of the triglycerides of the fat phase,
- an amount of C12:0 (lauric acid) of less than 2 wt.%.

4. Plant-based cheese substitute according to any one of the preceding claims, wherein the fat phase comprises less than 25 wt.%, preferably less than 20 wt.% of polyunsaturated fatty acids, more preferably less than 17.5 wt.%, most preferably less than 15 wt.% of polyunsaturated fatty acids.

5. Plant-based cheese substitute according to any one of the preceding claims, wherein the fat phase comprises from 20 - 80 wt.% saturated fatty acids.

6. Plant-based cheese substitute according to any one of the preceding claims, wherein the fat phase comprises less than 80 wt.% saturated fatty acids, preferably less than 50 wt.% saturated fatty acids, more preferably less than 40 wt.%, most preferably less than 30 wt.%.

7. Plant-based cheese substitute according to any one of the preceding claims, wherein the fat phase comprises an amount of H-type fatty acids (stearic acid and palmitic acid) from 10 to 50 wt.%.

8. Plant-based cheese substitute according to any one of the preceding claims, wherein the fat phase comprises an amount of C18:0 from 5 to 25 wt.%.

9. Plant-based cheese substitute according to any one of the preceding claims, wherein the fat phase further comprises a vegetable oil selected from the group consisting of rapeseed oil, high oleic rapeseed oil, high erucic acid rapeseed oil, soybean oil, sunflower oil, high oleic sunflower oil, high stearic acid sunflower oil, linseed oil, olive oil, corn oil, cottonseed oil, carinata oil, groundnut oil, safflower oil, high oleic safflower oil, peanut oil, rice oil, camelina oil and mixtures thereof, preferably a vegetable oil selected from the group consisting of rapeseed oil, high oleic sunflower oil, sunflower oil, linseed oil and mixtures thereof, more preferably sunflower oil or high oleic sunflower oil, most preferably high oleic sunflower oil.

10. Plant-based cheese substitute according to any one of the preceding claims, wherein the fat phase comprises an amount of C18:0 at the 2-position of the glycerol backbone (2-C18:0) of from 5 to 50 wt.%, preferably from 10 - 45 wt.%, calculated on the total amount of fatty acids at the 2-position of the glycerol backbone in the fat phase.

11. Plant-based cheese substitute according to any one of the preceding claims, wherein the fat phase comprises a combined amount of H2U, HU2, and U3 triglycerides, calculated on the amount of triglycerides of at least 50 wt.%, preferably at least 80 wt.%, most preferably at least 90 wt.%, wherein H is C16:0 and/or C18:0, and U is an unsaturated fatty acid.

12. Plant-based cheese substitute according to any of the preceding claims, comprising 15 - 35 wt.% starches, preferably wherein the starches are selected from the group consisting of wheat starch, corn starch, potato starch, rice starch, tapioca starch, and any combination thereof, more preferably wherein the starches are modified starches.

13. Plant-based cheese substitute according to any of the preceding claims, comprising 4 - 9 wt.% non-animal protein.

14. Plant-based cheese substitute according to any of the preceding claims, wherein the non-animal protein is a plant protein, plant protein isolate or plant protein concentrate, preferably wherein the plant protein in the plant protein, plant protein isolate or plant protein concentrate is selected from the group consisting of lentil protein, fava (*vicia faba*) protein and pea protein or combinations thereof.

15. A method of preparing a plant-based cheese substitute according to any one of the preceding claims, the method comprising the steps of:
- mixing fat, water, plant sterol esters, optional starches, and optional non-animal proteins;
- providing a homogenous mixture from the mixed ingredients by mixing under shear to form an emulsion;
- providing a plant-based cheese analogue composition;
- forming the plant-based cheese substitute.

## Patentansprüche

1. Pflanzenbasierter Käseersatz, umfassend:
- 18 - 35 Gew.-% einer Fettphase;
- 0,1 - 20 Gew.-% nichttierisches Protein und/oder 10 - 50 Gew.-% Stärken, die gegebenenfalls modifiziert sind;
- wobei der Rest (bis zu 100 Gew.-%) Wasser ist,
wobei die Gew.-% auf die Gesamtzusammensetzung berechnet sind,
wobei der Käseersatz 0,5 - 10 Gew.-%, bevorzugt 0,5 - 8 Gew.-%, weiter bevorzugt 1 - 5 Gew.-%, Pflanzensterinester, bezogen auf das Gewicht des Käseersatzes, umfasst.

2. Pflanzenbasierter Käseersatz nach Anspruch 1, wobei die Fettphase eine Menge an C18:0 an der 2-Position des Glyceringerüsts (2-C18:0) von mindestens 5 Gew.-%, berechnet auf der Gesamtmenge an Fettsäuren an der 2-Position des Glyceringerüsts in der Fettphase, umfasst,
wobei die Fettphase nicht mehr als 5 Gew.-% von
- tropischem Öl oder aus tropischem Öl gewonnenen Fraktionen, wobei das tropische Öl aus Kokosöl, Sheaöl, Palmkernöl, Palmöl, Illipeöl, Salöl, Mangoöl, Kakaobutter, Kokumöl und Kombinationen davon ausgewählt ist,
und nicht mehr als 5 Gew.-% von
- hydriertem Öl oder Fett oder Fraktionen davon,
jeweils bezogen auf das Gewicht der Fettphase, enthält.

3. Pflanzenbasierter Käseersatz nach Anspruch 1 oder 2, wobei die Fettphase, berechnet auf die Menge an Fettsäuren der Triglyceride der Fettphase,
- eine Menge an C12:0 (Laurinsäure) von weniger als 2 Gew.- % umfasst.

4. Pflanzenbasierter Käseersatz nach einem der vorhergehenden Ansprüche, wobei die Fettphase weniger als 25 Gew.-%, vorzugsweise weniger als 20 Gew.-%, mehrfach ungesättigte Fettsäuren, weiter bevorzugt weniger als 17,5 Gew.-%, ganz besonders bevorzugt weniger als 15 Gew.-%, mehrfach ungesättigte Fettsäuren umfasst.

5. Pflanzenbasierter Käseersatz nach einem der vorhergehenden Ansprüche, wobei die Fettphase 20 - 80 Gew.-% gesättigte Fettsäuren umfasst.

6. Pflanzenbasierter Käseersatz nach einem der vorhergehenden Ansprüche, wobei die Fettphase weniger als 80 Gew.-%, vorzugsweise weniger als 50 Gew.-%, gesättigte Fettsäuren, weiter bevorzugt weniger als 40 Gew.-%, ganz besonders bevorzugt weniger als 30 Gew.-%, gesättigte Fettsäuren umfasst.

7. Pflanzenbasierter Käseersatz nach einem der vorhergehenden Ansprüche, wobei die Fettphase eine Menge an Fettsäuren vom H-Typ (Stearinsäure und Palmitinsäure) von 10 bis 50 Gew.-% umfasst.

8. Pflanzenbasierter Käseersatz nach einem der vorhergehenden Ansprüche, wobei die Fettphase eine Menge an C18:0 von 5 bis 25 Gew.-% umfasst.

9. Pflanzenbasierter Käseersatz nach einem der vorhergehenden Ansprüche, wobei die Fettphase ferner ein Pflanzenöl umfasst, das aus der Gruppe bestehend aus Rapsöl, ölsäurereichem Rapsöl, erucasäurereichem Rapsöl, Sojaöl, Sonnenblumenöl, ölsäurereichem Sonnenblumenöl, stearinsäurereichem Sonnenblumenöl, Leinöl, Olivenöl, Maisöl, Baumwollsaatöl, Carinataöl, Erdnussöl, Safloröl, ölsäurereichem Safloröl, Erdnussöl, Reisöl, Leindotteröl und Mischungen davon ausgewählt ist, vorzugsweise ein Pflanzenöl, das aus der Gruppe bestehend aus Rapsöl, ölsäurereichem Sonnenblumenöl, Sonnenblumenöl, Leinöl und Mischungen davon ausgewählt ist, weiter bevorzugt Sonnenblumenöl oder ölsäurereiches Sonnenblumenöl, ganz besonders bevorzugt ölsäurereiches Sonnenblumenöl.

10. Pflanzenbasierter Käseersatz nach einem der vorhergehenden Ansprüche, wobei die Fettphase eine Menge an C18:0 an der 2-Position des Glyceringerüsts (2-C18:0) von 5 bis 50 Gew.-%, vorzugsweise von 10 - 45 Gew.-%, berechnet auf die Gesamtmenge an Fettsäuren an der 2-Position des Glyceringerüsts in der Fettphase, umfasst.

11. Pflanzenbasierter Käseersatz nach einem der vorhergehenden Ansprüche, wobei die Fettphase eine kombinierte Menge an H2U-, HU2- und U3-Triglyceriden, berechnet auf der Menge an Triglyceriden, von mindestens 50 Gew.-%, vorzugsweise mindestens 80 Gew.-%, ganz besonders bevorzugt mindestens 90 Gew.-%, umfasst, wobei H C16:0 und/oder C18:0 ist und U eine ungesättigte Fettsäure ist.

12. Pflanzenbasierter Käseersatz nach einem der vorhergehenden Ansprüche, umfassend 15 - 35 Gew.-% Stärken, wobei die Stärken vorzugsweise aus der Gruppe bestehend aus Weizenstärke, Maisstärke, Kartoffelstärke, Reisstärke, Tapiokastärke und einer beliebigen Kombination davon ausgewählt sind, wobei es sich bei den Stärken weiter bevorzugt um modifizierte Stärken handelt.

13. Pflanzenbasierter Käseersatz nach einem der vorhergehenden Ansprüche, umfassend 4 - 9 Gew.-% nichttierisches Protein.

14. Pflanzenbasierter Käseersatz nach einem der vorhergehenden Ansprüche, wobei es sich bei dem nichttierischen Protein um ein Pflanzenprotein, Pflanzenproteinisolat oder Pflanzenproteinkonzentrat handelt, wobei das Pflanzenprotein in dem Pflanzenprotein, Pflanzenproteinisolat oder Pflanzenproteinkonzentrat vorzugsweise aus der Gruppe bestehend aus Linsenprotein, Ackerbohnen(Vicia faba)-Protein und Erbsenprotein oder Kombinationen davon ausgewählt ist.

15. Verfahren zur Herstellung eines pflanzenbasierten Käseersatzes nach einem der vorhergehenden Ansprüche, wobei das Verfahren die folgenden Schritte umfasst:
- Mischen von Fett, Wasser, Pflanzensterinestern, fakultativen Stärken und fakultativen nichttierischen Proteinen;
- Bereitstellen einer homogenen Mischung aus den gemischten Bestandteilen durch Mischen unter Scherung zur Bildung einer Emulsion;
- Bereitstellen einer pflanzenbasierten Käseanalogonzusammensetzung;
- Bilden des pflanzenbasierten Käseersatzes.

## Revendications

1. Substitut de fromage à base végétale comprenant :
- 18 à 35 % en poids d'une phase grasse ;
- 0,1 à 20 % en poids de protéines non animales et/ou 10 à 50 % en poids d'amidons, qui sont éventuellement modifiés ;
- le reste (jusqu'à 100 % en poids) étant de l'eau,
dans lequel les % en poids sont calculés sur la composition totale,
dans lequel le substitut de fromage comprend de 0,5 à 10 % en poids, de préférence de 0,5 à 8 % en poids, de préférence encore de 1 à 5 % en poids d'esters de stérols végétaux, par rapport au poids du substitut de fromage.

2. Substitut de fromage à base végétale selon la revendication 1, dans lequel la phase grasse comprend une quantité de C18:0 au niveau de la position 2 du squelette de glycérol (2-C18:0) d'au moins 5 % en poids, calculée sur la quantité totale d'acides gras au niveau de la position 2 du squelette de glycérol dans la phase grasse,
dans lequel la phase grasse ne contient pas plus de 5 % en poids
- d'huile tropicale ou de fractions dérivées d'huile tropicale, dans laquelle l'huile tropicale est choisie parmi l'huile de coco, l'huile de karité, l'huile de palmiste, l'huile de palme, l'huile d'illipé, l'huile de sal, l'huile de mangue, le beurre de cacao, l'huile de kokum, et leurs combinaisons,
et pas plus de 5 % en poids
- d'huile ou graisse hydrogénée ou ses fractions,
chacun par rapport au poids de la phase grasse.

3. Substitut de fromage à base végétale selon la revendication 1 ou 2, dans lequel la phase grasse comprend, calculée sur la quantité d'acides gras des triglycérides de la phase grasse,
- une quantité de C12:0 (acide laurique) inférieure à 2 % en poids.

4. Substitut de fromage à base végétale selon l'une quelconque des revendications précédentes, dans lequel la phase grasse comprend moins de 25 % en poids, de préférence moins de 20 % en poids d'acides gras polyinsaturés, plus préférablement moins de 17,5 % en poids, le plus préférablement moins de 15 % en poids d'acides gras polyinsaturés.

5. Substitut de fromage à base végétale selon l'une quelconque des revendications précédentes, dans lequel la phase grasse comprend de 20 à 80 % en poids d'acides gras saturés.

6. Substitut de fromage à base végétale selon l'une quelconque des revendications précédentes, dans lequel la phase grasse comprend moins de 80 % en poids d'acides gras saturés, de préférence moins de 50 % en poids d'acides gras saturés, plus préférablement moins de 40 % en poids, le plus préférablement moins de 30 % en poids.

7. Substitut de fromage à base végétale selon l'une quelconque des revendications précédentes, dans lequel la phase grasse comprend une quantité d'acides gras de type H (acide stéarique et acide palmitique) de 10 à 50 % en poids.

8. Substitut de fromage à base végétale selon l'une quelconque des revendications précédentes, dans lequel la phase grasse comprend une quantité de C18:0 de 5 à 25 % en poids.

9. Substitut de fromage à base végétale selon l'une quelconque des revendications précédentes, dans lequel la phase grasse comprend en outre une huile végétale choisie dans le groupe constitué par l'huile de colza, l'huile de colza à haute teneur en acide oléique, l'huile de colza à haute teneur en acide érucique, l'huile de soja, l'huile de tournesol, l'huile de tournesol à haute teneur en acide oléique, l'huile de tournesol à haute teneur en acide stéarique, l'huile de lin, l'huile d'olive, l'huile de maïs, l'huile de coton, l'huile de carinata, l'huile d'arachide, l'huile de carthame, l'huile de carthame à haute teneur en acide oléique, l'huile d'arachide, l'huile de riz, l'huile de caméline et leurs mélanges, de préférence une huile végétale choisie dans le groupe constitué par l'huile de colza, l'huile de tournesol à haute teneur en acide oléique, l'huile de tournesol, l'huile de lin et leurs mélanges, plus préférablement l'huile de tournesol ou l'huile de tournesol à haute teneur en acide oléique, le plus préférablement l'huile de tournesol à haute teneur en acide oléique.

10. Substitut de fromage à base végétale selon l'une quelconque des revendications précédentes, dans lequel la phase grasse comprend une quantité de C18:0 au niveau de la position 2 du squelette de glycérol (2-C18:0) de 5 à 50 % en poids, de préférence de 10 à 45 % en poids, calculée sur la quantité totale d'acides gras au niveau de la position 2 du squelette de glycérol dans la phase grasse.

11. Substitut de fromage à base végétale selon l'une quelconque des revendications précédentes, dans lequel la phase grasse comprend une quantité combinée de triglycérides H2U, HU2 et U3, calculée sur la quantité de triglycérides d'au moins 50 % en poids, de préférence d'au moins 80 % en poids, le plus préférablement d'au moins 90 % en poids, H étant C16:0 et/ou C18:0, et U étant un acide gras insaturé.

12. Substitut de fromage à base végétale selon l'une quelconque des revendications précédentes, comprenant 15 à 35 % en poids d'amidons, de préférence dans lequel les amidons sont choisis dans le groupe constitué par l'amidon de blé, l'amidon de maïs, l'amidon de pomme de terre, l'amidon de riz, l'amidon de tapioca, et toute combinaison de ceux-ci, plus préférablement dans lequel les amidons sont des amidons modifiés.

13. Substitut de fromage à base végétale selon l'une quelconque des revendications précédentes, comprenant 4 à 9 % en poids de protéine non animale.

14. Substitut de fromage à base végétale selon l'une quelconque des revendications précédentes, dans lequel la protéine non animale est une protéine végétale, un isolat de protéine végétale ou un concentré de protéine végétale, de préférence dans lequel la protéine végétale dans la protéine végétale, l'isolat de protéine végétale ou le concentré de protéine végétale est choisie dans le groupe constitué par la protéine de lentille, la protéine de fève (vicia faba) et la protéine de pois ou leurs combinaisons.

15. Procédé de préparation d'un substitut de fromage à base végétale selon l'une quelconque des revendications précédentes, le procédé comprenant les étapes de :
- mélange de graisse, d'eau, d'esters de stérols végétaux, d'amidons facultatifs et de protéines non animales facultatives ;
- fourniture d'un mélange homogène à partir des ingrédients mélangés par mélange sous cisaillement pour former une émulsion ;
- fourniture d'une composition d'analogue de fromage à base végétale ;
- mise en forme du substitut de fromage à base végétale.
